# EUROPEAN PATENT APPLICATION

(11) **EP 4 848 447 A1**
(43) Date of publication of application: **02.12.2026**
(21) Application number: 25179305.5
(22) Date of filing: 28.05.2025
(51) Int. Cl.: H01M 50/367, H01M 50/392, H01M 50/249, H01M 50/383, H01M 50/30

(54) **A BATTERY SYSTEM AND AN ELECTRIC VEHICLE INCLUDING THE BATTERY SYSTEM**

(71) Applicant: Samsung SDI Co., Ltd., Gyeonggi-do (KR)
(72) Inventor: Kraberger, Gernot, 8010 Graz (AT); Resek, Matthias, 8511 St. Stefan ob Stainz (AT); Stern, Matevz, 2000 Maribor (SI)
(74) Representative: Gulde & Partner

(57) **Abstract**

The present disclosure refers to a battery system (1). The battery system (1) includes a battery pack (10) including a housing (11) and a plurality of battery cells (15) accommodated within the housing (11). The battery system (1) further includes an exhaust path (20) fluidly connected to the battery cells (15) and to an outlet (17) which leads out of the battery system (1), wherein the exhaust path (20) includes a redirection element (23) configured to redirect venting products (VP) exhausted by at least one of the battery cells (15) and flowing along the exhaust path (20) while a thermal runaway and a pocket (24), wherein the pocket (24) is arranged at a first side of the exhaust path (21) and following the redirection element (23). Also, the battery system (1) includes a particle trap (30) for solids of the venting products (VP), which is arranged in a first side of the redirection element (231), into which the solids are forced due to their inertia, such that a second side of the redirection element (232) remains free and the solids are trapped in the particle trap (30), and such that solids which are slowed down by the particle trap (30) are caught by the pocket (24). The present disclosure further refers to an electric vehicle including the battery system (1).

## Description

### Field of the Disclosure

The present disclosure relates to a battery system. The present disclosure also relates to an electric vehicle including the battery system.

### Technological Background

Recently, vehicles for transportation of goods and peoples have been developed that use electric power as a source for motion. Such an electric vehicle is an automobile that is propelled permanently or temporarily by an electric motor using energy stored in rechargeable batteries. An electric vehicle may be solely powered by batteries (Battery Electric Vehicle BEV) or may include a combination of an electric motor and, for example, a conventional combustion engine (Plugin Hybrid Electric Vehicle PHEV). BEVs and PHEVs use high-capacity rechargeable batteries, which are designed to provide power for propulsion over sustained periods of time.

Generally, a rechargeable (or secondary) battery cell includes an electrode assembly including a positive electrode, a negative electrode, and a separator interposed between the electrodes. A solid or liquid electrolyte allows movement of ions during charging and discharging of the battery cell. The electrode assembly is located in a casing and electrode terminals, which are positioned on the outside of the casing, establish an electrically conductive connection to the electrodes. The shape of the casing may be, for example, cylindrical or rectangular.

A battery module is formed of a plurality of battery cells connected together in series or in parallel. That is, the battery module is formed by interconnecting the electrode terminals of the plurality of battery cells depending on a desired amount of power and in order to realize a high-power rechargeable battery.

Battery modules can be constructed either in a block design or in a modular design. In the block design each battery cell is coupled to a common current collector structure and a common battery management system and the unit thereof is arranged in a housing. In the modular design, pluralities of battery cells are connected together to form submodules and several submodules are connected together to form the battery module. In automotive applications, battery systems generally include a plurality of battery modules connected together in series to provide a desired voltage.

A battery pack is a set of any number of (for example identical) battery modules or single battery cells. The battery modules, respectively battery cells, may be configured in a series, parallel or a mixture of both to deliver the desired voltage, capacity, and/or power density. Components of a battery pack include the individual battery modules, and the interconnects, which provide electrical conductivity between the battery modules.

A battery system may also include a battery management system (BMS), which is any suitable electronic system that is configured to manage the rechargeable battery cell, battery module, and battery pack, such as by protecting the batteries from operating outside their safe operating area, monitoring their states, calculating secondary data, reporting that data, controlling its environment, authenticating it and/or balancing it. For example, the BMS may monitor the state of the battery cell as represented by voltage (e.g., a total voltage of the battery pack or battery modules, and/or voltages of individual battery cells), temperature (e.g., an average temperature of the battery pack or battery modules, coolant intake temperature, coolant output temperature, or temperatures of individual battery cells), coolant flow (e.g., flow rate and/or cooling liquid pressure), and current. Additionally, the BMS may calculate values based on the above characteristics or measured values, such as minimum and maximum cell voltage, state of charge (SOC) or depth of discharge (DOD) to indicate the charge level of the battery cell, state of health (SOH; a variously-defined measurement of the remaining capacity of the battery cell as a percent of the original capacity), state of power (SOP; the amount of power available for a defined time interval given the current power usage, temperature and other conditions), state of safety (SOS), maximum charge current as a charge current limit (CCL), maximum discharge current as a discharge current limit (DCL), and internal impedance of a cell (to determine open circuit voltage).

The BMS may be centralized such that a single controller is connected to the battery cells through a multitude of wires. In other examples, the BMS may be also distributed, with a BMS board is installed at each cell, with just a single communication cable between the battery cell and a controller. In yet other examples, the BMS may have a modular construction including a few controllers, each handling a certain number of cells, while communicating between the controllers. Centralized BMSs are most economical, but are least expandable, and are plagued by a multitude of wires. Distributed BMSs are the most expensive, but are simplest to install, and offer the cleanest assembly. Modular BMSs provide a compromise of the features and problems of the other two topologies.

The BMS may protect the battery pack from operating outside its safe operating area. Operation outside the safe operating area may be indicated by overcurrent, over-voltage (during charging), over-temperature, under-temperature, overpressure, and ground fault or leakage current detection. The BMS may prevent the battery from operating outside its safe operating parameter by including an internal switch (e.g., a relay or solid-state device) that opens if the battery is operated outside its safe operating parameters, requesting the devices to which the battery is connected to reduce or even terminate using the battery, and actively controlling the environment, such as through heaters, fans, air conditioning or liquid cooling.

The mechanical integration of a battery pack requires appropriate mechanical connections between the individual components, e.g. of battery modules, and between them and a supporting structure of the vehicle. These connections must remain functional and save during the average service life of the battery system. Further, installation space and interchangeability requirements must be met, especially in mobile applications.

Mechanical integration of battery modules may be achieved by providing a carrier framework and by positioning the battery modules thereon. Fixing the battery cells or battery modules may be achieved by fitted depressions in the framework or by mechanical interconnectors such as bolts or screws. Alternatively, the battery modules are confined by fastening side plates to lateral sides of the carrier framework. Further, cover plates may be fixed atop and below the battery modules.

The carrier framework of the battery pack is mounted to a carrying structure of the vehicle. In case the battery pack shall be fixed at the bottom of the vehicle, the mechanical connection may be established from the bottom side by for example bolts passing through the carrier framework of the battery pack. The framework is usually made of aluminum or an aluminum alloy to lower the total weight of the construction.

Battery systems according to the prior art, despite any modular structure, usually include a battery housing that serves as enclosure to seal the battery system against the environment and provides structural protection of the battery system's components. Housed battery systems are usually mounted as a whole into their application environment, e.g. an electric vehicle.

An active or passive thermal management system may be included to provide thermal control of the battery pack, to safely use the at least one battery module by efficiently emitting, discharging, and/or dissipating heat generated from its rechargeable batteries. If the heat emission/discharge/dissipation is not sufficiently performed, temperature deviations may occur between respective battery cells, such that the at least one battery module may no longer generate a desired (or designed) amount of power. In addition, an increase of the internal temperature can lead to abnormal reactions occurring therein, and thus charging and discharging performance of the rechargeable battery deteriorates and the life-span of the rechargeable battery is shortened. Thus, cell cooling for effectively emitting/discharging/dissipating heat from the cells is required.

Exothermic decomposition of cell components may lead to a so-called thermal runaway. Generally, thermal runaway describes a process that accelerates due to increased temperature, in turn releasing energy that further increases temperature. Thermal runaway occurs in situations when an increase in temperature changes the conditions in a way that causes a further increase in temperature, often leading to a destructive result. In rechargeable battery systems, thermal runaway is associated with strong exothermic reactions that are accelerated by temperature rise. In thermal runaway, the battery cell temperature rises incredibly fast and the energy stored is released very suddenly. In extreme cases, thermal runaway can cause battery cells to explode and start fire. In minor cases, it can cause battery cells to be damaged beyond repair.

When a battery cell is heated above a critical temperature (for example, above 150°C) the battery cell can transition into a thermal runaway. Generally, temperatures outside of the safe region on either the low or high side may lead to irreversible damage to the battery cell and therefore may possible trigger thermal runaway. Thermal runaway may also occur due to an internal or external short circuit of the battery cell or poor battery maintenance. For example, overcharging or rapid charging may lead to thermal runaway.

During thermal runaway, the failed battery cell may reach a temperature exceeding 700°C. Further, large quantities of hot gas are ejected from inside of the failed battery cell through the venting opening of the cell housing into the battery pack. The main components of the vented gas are H₂, CO₂, CO, electrolyte vapor and other hydrocarbons. The vented gas is therefore flammable and potentially toxic. The vented gas also causes a gas-pressure to increase inside the battery pack. In the worst case, the high temperatures lead to the process spreading to neighboring cells and fire in the battery pack. At this stage, the fire is hardly to extinguish.

During the thermal runaway of a cell, a large amount of venting gases are produced. They need to be guided to the outside and are typically leaving the pack through a battery pack venting element. One typical way of designing the pack venting element is a plastic part with a membrane for pressure equalization and additionally a spring-loaded mechanism that opens at a defined pack overpressure. During thermal runaway, once the defined pack overpressure is reached and the venting element opens, the venting gas can flow out and the pressure reduces.

As mentioned above, battery systems comprise multiple battery cells in serial connection to achieve a sufficient high voltage to provide a powerful source of energy for propulsion of electric vehicles. In case of a malfunction of one or more cells or voltage sources an overheating may happen, which causes a thermal runaway of a single cell or multiple cells with generation of hot venting gas as well as hot particles and fine dust exiting the battery system causing outside fire. Internal measures of particle separators and cooling depend on available space within the system. In some cases that space is limited and therefore further measurements need to be considered.

WO 2024/014825 A1 discloses a battery pack with a pack frame, a venting passage and an outlet provided at an end of the venting passage. The battery pack comprises a primary filter in a portion where a direction of the venting passage changes.

EP 3 910 699 A1 discloses a battery system with ribs arranged inside a bottom half of a channel for guiding venting products. The ribs are arranged transverse to a longitudinal direction of the channel and extend from a channel bottom upwards.

### Summary of Invention

The invention is defined by the appended claims. The description that follows is subjected to this limitation. Any disclosure lying outside the scope of the claims is only intended for illustrative as well as comparative purposes.

According to an embodiment, a battery system is provided, including: a battery pack including a housing and a plurality of battery cells accommodated within the housing, an exhaust path fluidly connected to the battery cells and to an outlet which leads out of the battery system, wherein the exhaust path includes a redirection element configured to redirect venting products exhausted by at least one of the battery cells and flowing along the exhaust path while a thermal runaway, and a pocket, wherein the pocket is arranged at an first side of the exhaust path and following the redirection element, a particle trap arranged in a first side of the redirection element, into which solids of the venting products are forced due to their inertia, such that a second side of the redirection element remains free and the solids are trapped in the particle trap, and such that solids which are slowed down by the particle trap are caught by the pocket.

According to another embodiment, an electric vehicle is provided including the battery system according to an embodiment.

Further aspects of the present disclosure could be learned from the dependent claims or the following description.

### Brief Description of the Drawings

Features will become apparent to those of ordinary skill in the art by describing in detail exemplary embodiments with reference to the attached drawings in which:
FIG. 1 illustrates a schematic structure of a battery system in cross-sectional view according to one embodiment.
FIG. 2 illustrates a schematic structure of a battery system in cross-sectional view according to another embodiment.
FIG. 3 illustrates a schematic structure of a battery system in cross-sectional view according to another embodiment.
FIG. 4 illustrates a schematic structure of a part of a battery system as viewed from an interior toward a front side according to another embodiment.
FIG. 5 illustrates a schematic structure of a particle trap of a battery system in side view according to another embodiment.

### Detailed Description of the Invention

Reference will now be made in detail to embodiments, examples of which are illustrated in the accompanying drawings. Effects and features of the exemplary embodiments, and implementation methods thereof will be described with reference to the accompanying drawings. In the drawings, like reference numerals denote like elements, and redundant descriptions are omitted. The present disclosure, however, may be embodied in various different forms, and should not be construed as being limited to only the illustrated embodiments herein. Rather, these embodiments are provided as examples so that this disclosure will be thorough and complete, and will fully convey the aspects and features of the present disclosure to those skilled in the art.

Accordingly, processes, elements, and techniques that are not considered necessary to those having ordinary skill in the art for a complete understanding of the aspects and features of the present disclosure may not be described. In the drawings, the relative sizes of elements, layers, and regions may be exaggerated for clarity.

As used herein, the term "and/or" includes any and all combinations of one or more of the associated listed items. Further, the use of "may" when describing embodiments of the present disclosure refers to "one or more embodiments of the present disclosure." In the following description of embodiments of the present disclosure, the terms of a singular form may include plural forms unless the context clearly indicates otherwise.

It will be understood that although the terms "first" and "second" are used to describe various elements, these elements should not be limited by these terms. These terms are only used to distinguish one element from another element. For example, a first element may be named a second element and, similarly, a second element may be named a first element, without departing from the scope of the present disclosure. As used herein, the term "and/or" includes any and all combinations of one or more of the associated listed items. Expressions such as "at least one of," when preceding a list of elements, modify the entire list of elements and do not modify the individual elements of the list.

It will be further understood that the terms "include," "comprise," "including," or "comprising" specify a property, a region, a fixed number, a step, a process, an element, a component, and a combination thereof but do not exclude other properties, regions, fixed numbers, steps, processes, elements, components, and combinations thereof.

It will also be understood that when a film, a region, or an element is referred to as being "above" or "on" another film, region, or element, it can be directly on the other film, region, or element, or intervening films, regions, or elements may also be present.

Herein, the terms "upper" and "lower" are defined according to the z-axis. For example, the upper cover is positioned at the upper part of the z-axis, whereas the lower cover is positioned at the lower part thereof. In the drawings, the sizes of elements may be exaggerated for clarity. For example, in the drawings, the size or thickness of each element may be arbitrarily shown for illustrative purposes, and thus the embodiments of the present disclosure should not be construed as being limited thereto.

In the following description of embodiments of the present disclosure, the terms of a singular form may include plural forms unless the context clearly indicates otherwise.

Unless otherwise defined, all terms (including technical and scientific terms) used herein have the same meaning as commonly understood by one of ordinary skill in the art to which the present disclosure belongs. It will be further understood that terms, such as those defined in commonly used dictionaries, should be interpreted as having a meaning that is consistent with their meaning in the context of the relevant art and/or the present specification, and should not be interpreted in an idealized or overly formal sense, unless expressly so defined herein.

### General Concept

According to one aspect of the present disclosure, a battery system is provided. The battery system includes a battery pack including a housing and a plurality of battery cells accommodated within the housing. The battery system further includes an exhaust path fluidly connected to the battery cells and to an outlet which leads out of the battery system, wherein the exhaust path includes a redirection element configured to redirect venting products exhausted by at least one of the battery cells and flowing along the exhaust path while a thermal runaway and a pocket, wherein the pocket is arranged at a first side of the exhaust path and following the redirection element. Also, the battery system includes a particle trap for solids of the venting products, which is arranged in a first side of the redirection element, into which the solids are forced due to their inertia, such that a second side of the redirection element remains free and the solids are trapped in the particle trap, and such that solids which are slowed down by the particle trap are caught by the pocket.

In other words, the battery system includes a plurality of battery cells and an exhaust path leading from the battery cells to an environment of the battery system, wherein the exhaust path includes a redirection or deflector element adapted to redirect venting products exhausted by at least one of the battery cells and flowing along the exhaust path while a thermal runaway. The battery system includes a particle trap arranged at a first side, or in other words outer side, outer section or outside, of the redirection element such that a second side, or in other words inner side, inner section or inside, of the redirection element remains free. In other words, the exhaust path may have a cross-section, wherein in one part of the cross-section the particle trap may be arranged and wherein another area may remain free of the particle trap.

The battery system includes a housing, in which the battery cells are disposed and enclosed by the housing. The battery cells may be disposed between a floor of the housing and a top of the housing, or in other words above the floor and below the top. The relative arrangement may refer to an arrangement of the battery system in a vehicle that is used as intended, i.e. is in an operational position.

Each of the battery cells may include a venting side with a venting exit for allowing the venting products to exit the battery cells to a venting space within the housing and fluidly connected to the exhaust path to flow into the housing in case of the thermal runaway, the venting sides facing the top. The venting space may be the exhaust path or a part of the exhaust path.

The venting space may be arranged above the battery cells of the battery pack. The venting space is a room used to collect the venting products or, in other words, the venting gas, from one or more degassing battery cells for subsequent distribution. The venting gas may then be fed laterally, i.e. in a horizontal direction from the venting space and then in a vertical, downward direction to the outlet.

The plurality of battery cells may be arranged along a stacking direction, with the stacking direction running along a long side or a short side of the housing.

The battery pack may be single or multi-level. In other words, in a multi-level battery pack, at least two rows of battery cells are provided, with one of the two rows being arranged above the other of the two rows.

The battery system may include another battery pack, whereby the other battery pack may be arranged above the one battery pack so that in other words, a venting space may be arranged between the one battery pack and the other battery pack. This venting space can then serve as a collection space for both battery packs, with the venting products then being fed to the common exhaust path in the manner described.

The redirection element may be a part of the exhaust path. The redirection element may be formed by walls of the exhaust path and may be formed by changing the shape and/or the course of the exhaust path.

The housing may include the exhaust path or a part of the exhaust path. In other words, the exhaust path or a part of the exhaust path may be a part of the housing and may be formed by the housing.

The exhaust path may include further other redirection elements, which may include further other particle traps arranged therein as well as corresponding pockets. However, the further other redirection elements may also be arranged merely upstream or downstream of the one redirection element according to the invention in order to enable suitable additional deflections.

The particle trap may extend along a plane parallel to a plane defined by an y- and z-direction or a x- and y-direction.

The gist of the invention is to separate solid matter generated while a thermal runaway from venting gas by using a particle trap. The particle trap is adapted and mounted in a way that a venting gas flow does not need to pass through the particle trap but gets deflected off it such that the particle trap cannot hinder the venting gas from exiting the battery system, even if the particle trap is clogged by the solid matter. The exhaust path includes the pocket, wherein the pocket is arranged at the first side, or in other words outer side, outer section or outside, of the exhaust path following, or in other words downstream of, the redirection element such that solid matter which is slowed down by the particle trap is caught by the pocket.

The first side of the exhaust path may refer to a section of a cross-section of the exhaust path. In this case, it is then a cross-section perpendicular to a direction of flow of the venting gas, so that the first side refers to a section of the exhaust path, wherein a second side, or in other words inner side, inner section or inside, of the exhaust path refers to a remaining section.

The terms "inner" and "outer" refer to the flow of the venting gas. Here, "inner" relates to areas of a cross-section in which the venting gas covers a shorter path than areas of the same cross-section in which the venting gas covers a longer path and which are then referred to as "outer".

The same positional relationships applies to the first (outer) side of the redirection element and the second (inner) side of the redirection element.

As the venting gas is partly combustible, when it mixes with oxygen it can ignite if the necessary ignition energy is provided. Hot particles can act as ignition source. During the venting event of a first cell, the parts of the battery or vehicle that are downstream of the venting element are filled with ambient air which contains ca. 21 % oxygen. Therefore, when the venting gases mix with this ambient air, the conditions for ignition are given and there is a high risk of fire when hot particles are present. Therefore, holding back, trapping or filtering the hot particles is necessary. During venting events of further cells, the parts of the battery or vehicle that are downstream of the venting element are filled only with venting gas - no oxygen is present. Therefore, the ignition risk is not given. At that point, a conventional particle trap or filter is likely to get blocked by the held back particles, leading to the risk of insufficient remaining venting gas path cross-section and buildup of high pressure inside the battery pack, leading to a rupture. The particle trap in the venting gas path of a battery pack that traps back hot particles during the thermal runway venting event of the first cell of a pack is mounted so that the venting gas flow does not need to pass through it but gets deflected off it. Gas hits the particle trap but does not need to pass through it. Further, hot particles are trapped to prevent gas ignition and particles and gas are cooled. The issue of clogging as gas can always pass in front of the particle trap is reduced. This works by changing the direction of the venting gas, for example outflow in x-direction and continue to flow in z-direction after redirection, and the resulting inertia of particles leads them to hit the particle trap and get trapped while the venting gas changes the direction. The venting gas may also be redirected horizontally, i.e. in the y-direction. In such a case, the pocket may then be arranged below, i.e. in the z-direction, and/or downstream, i.e. in the y-direction, of the redirection element.

Accordingly, "below" may refer to a positive z-direction that runs upwards in a vertical direction.

Turbulent flows occur when the flow of a medium is disturbed, often caused by obstacles combined with internal friction, in the present case by the redirection element and the particle trap. This phenomenon, known as the turbulence effect, leads to chaotic and non-linear flow patterns. Turbulent flow is the movement of fluids in which turbulence occurs over a wide range of size scales. This type of flow is characterized by a three-dimensional flow field with a component that appears to vary randomly in time and space. The turbulence is caused by the difference in velocity of the flow at a certain distance from the overflowing surface of the redirection element and the particle trap compared to the flow near the surface of the redirection element and the particle trap. The Reynolds number can be used to determine whether a turbulent state is present. At high Reynolds numbers, the boundary layer flow is turbulent. For this purpose, the redirection element and the particle trap are approximated as longitudinally overflowing plates, so that a turbulent flow can be said to exist from a Reynolds number of 5*10⁵. As this is a dimensionless parameter, all common flow velocity measurement methods can be used to determine it. Cooling may be provided by outside air flowing over the housing. As a result, heat transfer is further improved by the turbulence in the exhaust path.

By increasing the turbulence, the particles experience increased swirling. Furthermore, the particles can no longer be kept in suspension by the turbulence and collide relatively frequently with the redirection element, the particle trap and the pocket due to gravity. As a result, they are subject to a certain loss of momentum, which delays their transportation. Following the redirection element, there can also be an increased separation of the flow, even combined with negative backflow. As a result, the particles experience a further delay and thus a better separation effect.

The operating principle is similar to that of mass force separation, whereby the particles suspended in the gas can no longer follow the flow movement and are deposited on internals or walls. They are differentiated according to the effective transport forces of gravity, inertia and centrifugal force. The mass forces responsible for particle separation act transversely to or against the flow resistance force and are directly proportional to the particle mass, so that the respective forces are proportional to the third power of the particle diameter. This separation principle is particularly effective for separating particles with an aerodynamic diameter of at least 2 µm. For particles of this size, the influence of diffusion can be neglected. Among other things, graphite particles with a size of 1 to 6 µm and liquid aluminum droplets with sizes of 1 to 3 mm occur in the venting products. Furthermore, clumping can occur in flow inlets up to 10 mm.

In principle, depending on its specific design, the redirection element and the particle trap can act as inertial or deflection separator, in which flows are deflected in such a way that the particles suspended in the gas cannot follow the flow movement and are separated further supported by the particle trap and pocket. The separation of particles, droplets or dust from flowing gases takes place due to the inertial force, in that the gas flow is merely deflected by the redirection element. The operating principle is based on the fact that the particles suspended in the gas can no longer follow a changing flow movement due to their inertia. They are deposited on internals or walls or separated in enriched form in a partial flow.

Additionally, the gas expands and there are lee areas within the exhaust path, for example in the particle trap and pocket, where the particles can settle down. Even if these lee areas are full with dust, there still remains a free path between the second side of the exhaust path and the redirection element such that the exhaust path is not clogged.

The improvement of the proposed solution is to ensure or increase a separation of hot particles and venting gas with high temperatures, for example beyond 1000° C, before exiting the system. With the further reduction of gas temperature and no or less hot particles exiting the pack the risk on outside fire is very much reduced.

The exhaust path, the redirection element and/or the particle trap may be made of material that is heat-resistant to temperatures that usually occur in the case of a thermal runway, such as steel. The exhaust path, the redirection element and/or the particle trap may be made of material that is heat-resistant to temperatures above 600° C or above 800° C or above 1000° C.

The pocket may be arranged, such that a flow path of the venting products is divided. The redirection element causes the particles to accumulate in one part of the venting gas stream in a cross-section of the gas stream, so that the dividing pocket allows the venting gas stream to continue separately. One part of the venting gas flow then has a higher concentration of particles and can be transported separately, for example to the pocket, while the other has a lower concentration of particles, whereby this part of the gas flow can continue independently. For this purpose, the pocket may have a wall that extends in the direction of flow or in the negative direction of flow.

In this document, the term "particles" refers to solid particles and liquid droplets. Furthermore, the term "gas" is used synonymous with "venting products".

The particle trap and the exhaust path may form a cavity. This forms a hollow space within which the decelerated particles are further trapped and can accumulate, resulting in increased separation of the particles from the venting gas. For this purpose, a first part and a third part of the particle trap may be flush with the exhaust path and lie against it, a second part of the particle trap being spaced from the exhaust gas path, the second part may be between the first and the third part.

According to one embodiment, the particle trap and/or the pocket includes a material adapted such that the solids of the venting products which are forced to the first side of the redirection element due to their inertia are trapped in the particle trap. The particle trap and/or the pocket may include the material which may be mounted in a way that a venting gas flow does not need to pass through the particle trap but gets deflected off it such that the particle trap cannot hinder the venting gases from exiting the battery system, even if the particle trap is clogged by the solid matter.

According to another embodiment, the particle trap and/or the pocket include knitting or woven metal wires, a honeycomb shape, or in other words porous shape, perforations and/or a grid element. In other words, the particle trap and/or the pocket may be made out of a metal woven sponge. This increases the filtering effect so that a greater proportion of particles are separated from the venting gas, as the surface area is increased and has a large number of regular or irregular structures that increase the deflection of the gas and increase the inertial force on the particles. The sponge-like structure in case of knitting or woven metal wires in the venting path of a pack that traps back hot particles is very effective and includes a high surface for binding particles and still allowing gas flow. These are simultaneously retained within the structures. The grid element arranged can filter the venting products. The dust or particles are deposited particularly in areas with grid-like structures. Consequently, deposition is enhanced by arranging such structures in areas where deposition is desired or not obstructive. They do not cause clogging, but increase the separation and deposition of particles. The particle trap and/or the pocket therefore may have perforations that pass through the particle trap and/or the pocket. In other words, the particle trap and/or the pocket is a grid-shaped element that has regular or irregular patterns of recesses or openings. This results in partial gas flow combined with the turbulence described in more detail above with its corresponding effects through the openings, as well as deposits of particles, which can ultimately lead to blockage, so that there is then a completely closed particle trap and/or the pocket, which causes complete guidance of the gas.

According to another embodiment, the pocket is arranged such that the slowed down solids are collected in the pocket with the help of gravity. The pocket may be arranged in relation to the particle trap such that gravity acts on the particles in such a way that the particles are caught by the pocket. For example, the venting gas may change the direction of the venting gas, for example outflow in x-direction, and continue to flow in z-direction after redirection, and the resulting gravity acts in z-direction (vertically). In this case, the pocket may be located below (and simultaneously downstream of) the particle trap. Alternatively, the venting gas may be redirected horizontally when the venting gas flow comes from one horizontal direction, for example a direction along the x-axis, and is redirected in another horizontal direction, for example a direction along the y-axis. In this case, the pocket may be located downstream (and optionally simultaneously downstream) of the particle trap. In other words, the slowed particles then sink into the pocket.

According to another embodiment, the redirection element includes a curved portion. This deflects the flowing gas. Due to the inertia to which the particles are subject, the particles accumulate in the curved area and slow down in relation to the gas flow. This results in improved separation of the particles.

According to another embodiment, the curved portion has such a radius of curvature that a deflection angle of the venting products flowing through the redirection element is less than 180°, may be less than 135° and may be less than 100°. This provides a suitable deflection, as a result of which the venting products and for example the particles are subjected to an inertia that enables improved separation.

According to another embodiment, the particle trap extends after the redirection element and/or the particle trap partially overlaps the redirection element. This means that the venting gas and for example the particles are already under the influence of the redirection element, so that the interaction between particle trap and venting gas is increased and better utilized.

According to another embodiment, the particle trap extends into the pocket. This achieves optimized guidance of the venting gas into the pocket. This results in improved collection of the particles in the pocket. The venting gas can continue to flow back towards the outlet, whereas the particles or at least a significant proportion of it remain in the pocket.

According to another embodiment, the particle trap and/or the pocket includes a roughened surface with a surface roughness greater than 0.5 mm. Roughness measurements of surfaces are possible in the form of line profiles and as planar, three-dimensional roughness measurements. The evaluation of profilometric analyses is regulated by the standards DIN EN ISO 4287 for line profiles and DIN EN ISO 25178 for three-dimensional roughness measurements of surfaces. The standards also define the parameters of roughness measurements. ISO 25178 defines the surface-related roughness value Sa via the arithmetic mean of the topography height z(x,y). A suitable optical measurement method is confocal microscopy. The surface roughness value Sa can be greater than 0.6 mm, greater than 0.8 mm and greater than 1 mm. The roughness further increases the turbulence, which improves the deposition effect as described above.

According to another embodiment, the redirection element is configured such that a spin is induced into the venting products. In other words, the arrangement generates a swirl flow like flow pattern. A swirl flow is a rotationally symmetrical flow with circumferential components. As with the swirl flow in pipes, in many cases there is an axial component of the flow velocity in addition to the circumferential component. The flowing particles then move along helical paths and cover a greater distance along the pipe wall within a certain pipe length compared to a swirl-free flow at the same flow velocity. This results in a greater pressure loss. Similar to a cyclone or centrifugal separator, the gas flow is set in a rotational motion after entering the device due to its own speed. The particles suspended in the gas are partially separated as a result of the centrifugal force acting on them. Vortex flows occur, for example, during the flow in a cyclone. A gas flow loaded with particles (e.g. air containing dust) enters a circular path tangentially. The particles are thrown outwards by the centrifugal force and caught. The radial pressure difference mentioned earlier plays a significant role here.

The redirection element may have a slope for inducing the spin. The slope or inclination refers to an inclined position in relation to the z-axis, so that in addition to directional components in the direction of the x- and y-axis, a directional component is also generated in the direction of the z-axis.

According to another embodiment, the redirection element includes a guide element which is designed to impose a rotational movement on the venting products. In other words, the guide element is arranged such that a spin is induced into the venting products. In other words, this redirection element may include a structural elevation, such as a ramp or a guide element, which locally deflects the flow so that further directional components are imposed on it. This can be used to generate a swirl flow (see above), for example. The guide element can, for example, be aligned in such a way that it imposes a directional component on the flow in the x-, y- or z-direction, i.e. directed sideways in relation to the battery pack. The guide element can be a guide vane.

According to another embodiment, the particle trap and/or the pocket includes surface filters and/or depth filters on their surface. Surface filters are characterized by the fact that the dust particles are separated almost exclusively on the surface of the filter. There they form a layer of dust that largely determines the filtration performance. In contrast, with depth filters the separated dust is deposited inside the filter structure. In this case, the filtration properties are determined by the internal composition of the filter. Depth filters usually consist of a tangle of synthetic fibers, glass fibers or even metal fibers. The diameters of the fibers range from a few µm to approx. 50 µm. In addition, nanofibers with diameters of 0.05 µm to 1 µm are becoming increasingly widespread. They are always used in combination with coarser fibers, which ensure the stability of the filter. The fibers only take up a few percent of the filter volume. Typical distances between them are 2 to 10 fiber diameters and are usually much larger than the particles to be separated. The separation of particles in depth filters is therefore not achieved by the sieve effect. Instead, the separation processes on the individual fibers are decisive for the separation. The ability of a filter to cut off particles is based on various physical and mechanical phenomena, such as diffusion, interception, inertia effect and sieve effect. Electrostatic forces between the particles and the particle trap and/or the pocket also play a role here. Particles with a larger diameter than the free space within the particle trap and/or the pocket cannot pass through the filter. Larger particles have too great an inertial force to be able to follow the gas flow when it is deflected by the particle trap and/or the pocket. The particles continue to move along their original path and stick to the upstream side of the particle trap and/or the pocket. The inertia effect increases with increasing air velocity and larger particle diameter.

According to another embodiment, the particle trap includes a plurality of humps. In other words, the particle trap may be a flat or uneven plate that has irregular or regular elevations that protrude in the direction of the second side of the exhaust path. Thus, there are several structures that exert a redirecting effect and support the redirection, which increases the turbulence and interaction of the venting gas with the particle trap.

According to another embodiment, the particle trap has concave shape or includes two planes which are connected in a ramp shape. This simply uses shapes that allow the venting gas to be directed towards the pocket so that a large proportion of the particles are collected there.

Yet another embodiment of the present disclosure refers to an electric vehicle. The electric vehicle includes the battery system according to the invention.

### Specific Embodiments

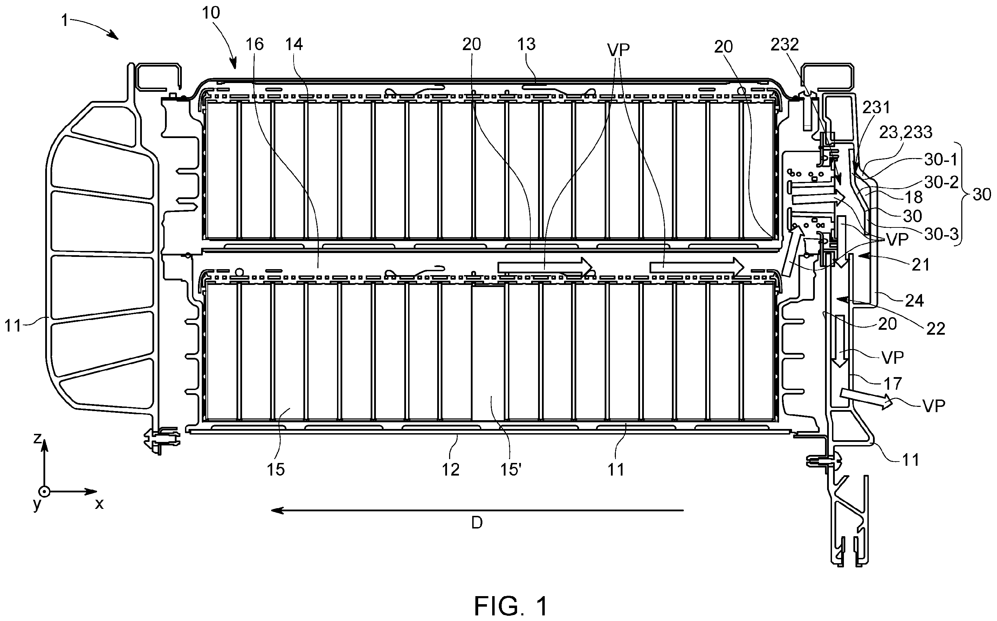

Fig. 1 is a cross-sectional view of a schematic structure of a battery system 1 view according to one embodiment. The battery system 1 includes a battery pack 10. The battery pack 10 includes a housing 11 with a floor 12 and a top 13 and a plurality of battery cells 15, 15' accommodated within the housing 11 as a battery cell stack 14 along a stacking direction D. The battery cells 15, 15' are disposed above the floor 12, wherein spacers (not shown) are disposed between adjacent battery cells 15, 15'. The relative arrangements are illustrated by the x-, y- and z-axes. Here, "below", "underneath", "above" and "over" refer to the z-axis, with meanings such as "below" referring to a negative z-direction and "above" to a positive z-direction.

The battery system 1 further includes an exhaust path 20 fluidly connected to the battery cells 15, 15' and to an outlet 17 which leads out of the battery system 1, wherein the exhaust path 20 includes a redirection element 23 configured to redirect venting products VP exhausted by at least one battery cell 15' of the battery cells 15, 15' and flowing along the exhaust path 20 while a thermal runaway. A thermal runaway therefore occurs in the battery cell 15', so that the battery cell 15' is a degassing battery cell. The battery system 1 further includes a pocket 24, wherein the pocket 24 is arranged at a first side of the exhaust path 21 and following the redirection element 23. The second side of the exhaust path 22 is opposite to the first side of the exhaust path 21 and is disposed on a remaining part of a cross-section of the exhaust path 20. Also, the battery system 1 includes a particle trap 30 for solids of the venting products VP, which is arranged in a first side of the redirection element 231, into which the solids are forced due to their inertia, such that a second side of the redirection element 232 remains free and the solids are trapped in the particle trap 30, and such that solids which are slowed down by the particle trap 30 are caught by the pocket 24.

Each of the battery cells 15, 15' includes a venting side with a venting exit for allowing the venting products VP to exit the battery cells 15, 15' to a venting space 16 within the housing 11 and fluidly connected to the exhaust path 20 to flow into the housing 11 in case of the thermal runaway, the venting sides facing the top 13. The venting space 16 is a part of the exhaust path 20.

The venting space 16 is arranged above the battery cells 15, 15' of the battery pack 10. The venting gas VP is fed laterally in a horizontal direction from the venting space 16 and then in a vertical, downward, direction to the outlet 17.

The battery pack 10 is multi-level, with one of the two rows of battery cells 15 being arranged above the other of the two rows.

In other words, the venting space 16 is arranged between the two rows of battery cells 15, 15'. This venting space 16 then serves as a collection space for all battery cells 15, 15', with the venting products VP then being fed to the common exhaust path 20 in the manner described.

The redirection element 23 is a part of the exhaust path 20. The redirection element 23 is formed by changing the shape of the exhaust path 20.

The particle trap 30 and the exhaust path 20 form a cavity 18. In this embodiment, the particle trap 30 and the redirection element 23 form the cavity 18. This forms a hollow space within which the decelerated particles are further trapped and can accumulate. To this end, a first portion 30-1 and a third portion 30-3 of the particle trap 30 are flush with and abut the exhaust path 20, a second portion 30-2 of the particle trap 30 being spaced from the exhaust path 20, the second portion being located between the first and third portions.

The particle trap 30 includes a material, wherein the material is adapted such that the solids of the venting products VP which are forced to the first side of the redirection element 231 due to their inertia are trapped in the particle trap 30, which is mounted in a way that a venting gas flow does not need to pass through the particle trap 30 but gets deflected off it such that the particle trap 30 cannot hinder the venting gases VP from exiting the battery system 1, even if the particle trap 30 is clogged by the solid matter.

The pocket 24 is arranged such that the slowed down solids are collected in the pocket 20 with the help of gravity. The venting gas VP initially has an outflow in x-direction, and after the redirection continues to flow in z-direction, and the resulting gravity acts in z-direction (vertically). In this embodiment, the pocket 24 is located below and simultaneously downstream of the particle trap 30. The slowed particles then sink into the pocket 24.

The redirection element 23 includes a curved portion 233. This deflects the flowing venting gas.

The particle trap 30 extends after the redirection element 23 and the particle trap 30 partially overlaps the redirection element 23. This means that the venting gas VP and for example the particles are already under the influence of the redirection element 23, so that the interaction between particle trap 30 and venting gas VP is increased and better utilized.

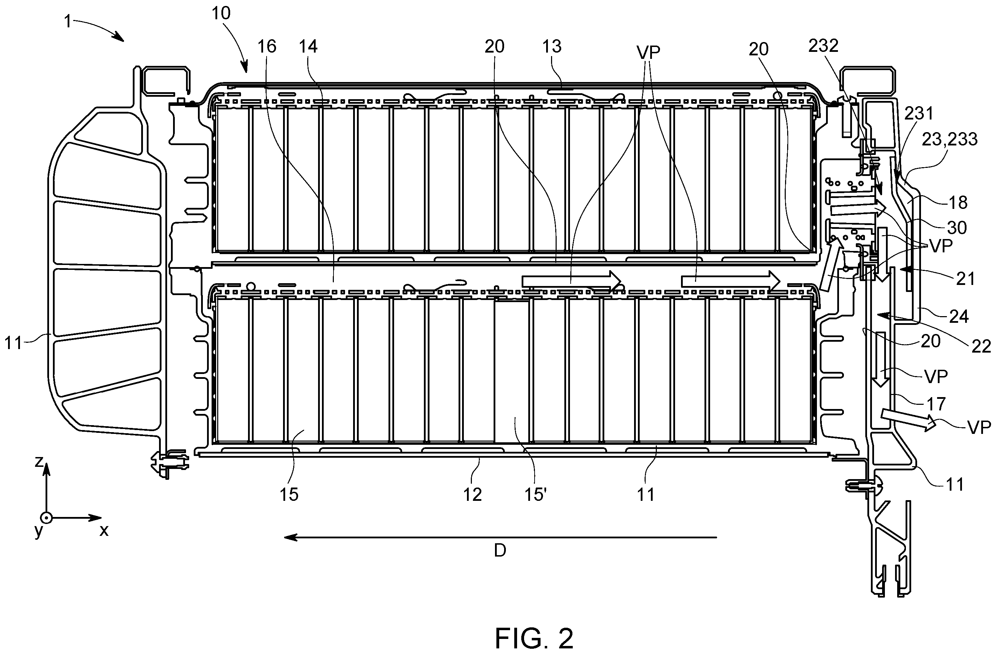

Fig. 2 is a cross-sectional view of a schematic structure of a battery system 1 according to another embodiment.

Components that are identical to those in Fig. 1 are not described again, so that the description of these components follows from the description of Fig. 1.

The particle trap 30 extends into the pocket 24. This achieves optimized guidance of the venting gas VP into the pocket 24. This results in improved collection of the particles in the pocket 24. The venting gas VP can continue to flow back towards the outlet 17, whereas the particles or at least a significant proportion remains in the pocket 24.

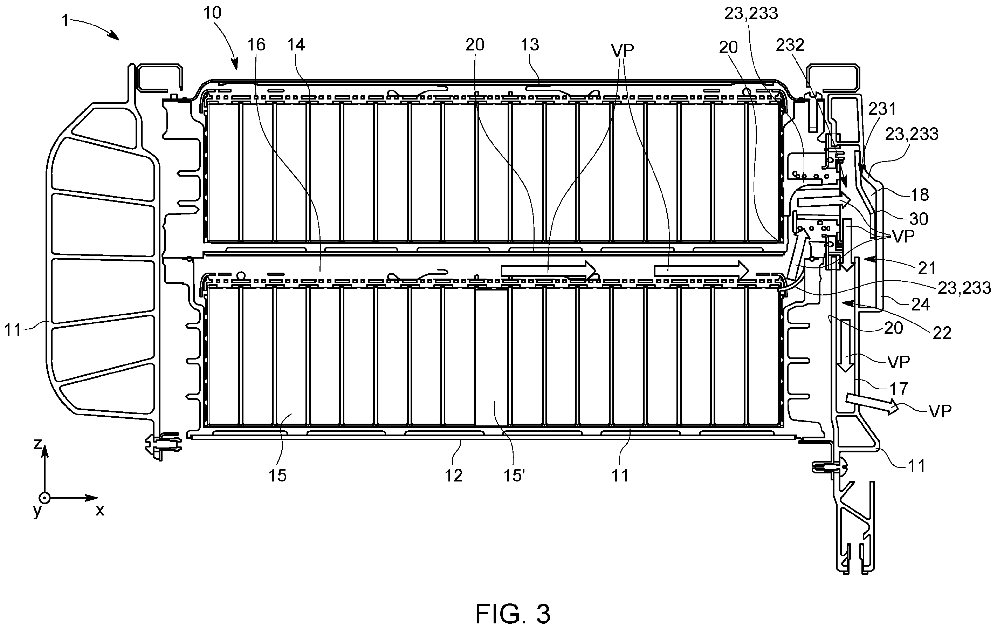

Fig. 3 is a cross-sectional view of a schematic structure of a battery system 1 view according to another embodiment.

Components that are identical to those in Fig. 1 are not described again, so that the description of these components follows from the description of Fig. 1.

The exhaust path 20 includes further other redirection elements 23. The further other redirection elements 23 are arranged merely upstream of the one redirection element 23 according to the invention in order to enable suitable additional deflections. The further redirection elements 23 include each a curved portion 233. This deflects the flowing gas.

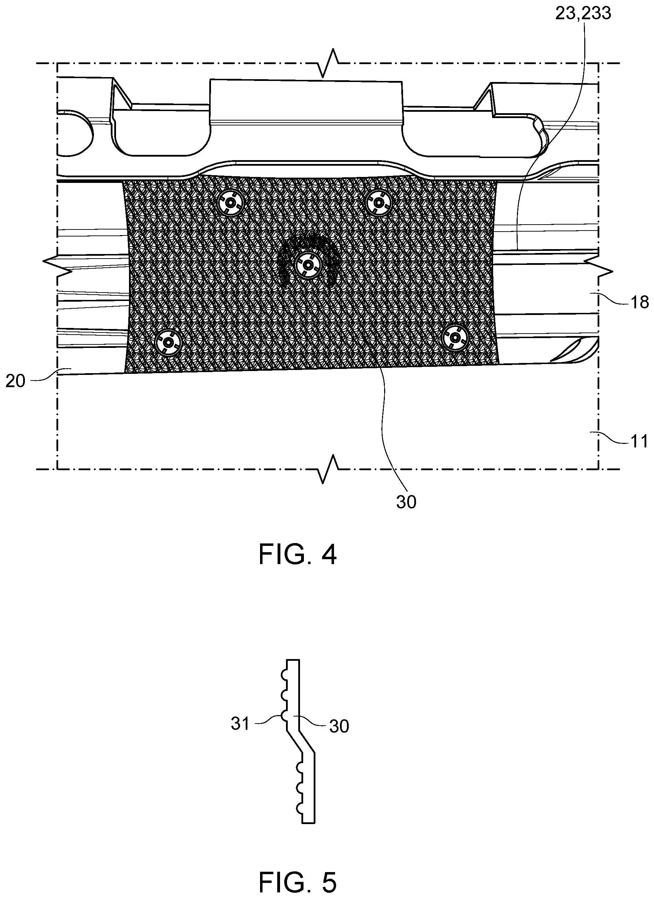

Fig. 4 is a schematic structure of a part of a battery system 1 as viewed from an interior toward a front side according to another embodiment. In other words, FIG. 4 illustrates a schematic structure of a part of a battery system as seen from inside the battery system, looking outward toward a front side, according to another embodiment. This internal perspective allows visualization of the structural and functional elements from the viewpoint of the system interior, offering insight into components that are otherwise shown from an external front view.

Components that are identical to those in Fig. 1 are not described again, so that the description of these components follows from the description of Fig. 1.

The particle trap 30 include woven metal wires. In other words, the particle trap 30 is formed from a metal woven sponge. This increases the filtering effect so that a greater proportion of particles are separated from the venting gas VP, as the surface area is increased and has a large number of regular or irregular structures that increase the deflection of the gas VP and increase the inertial force on the particles. The sponge-like structure in the exhaust path of the battery pack 10 that traps back hot particles is very effective and includes a high surface for binding particles and still allowing gas flow.

Fig. 5 is a side view of a schematic structure of a particle trap 30 of a battery system 1 according to another embodiment.

The particle trap 30 includes a plurality of humps 31. In other words, the particle trap 30 includes a plate that has elevations that protrude in the direction of the second side of the exhaust path 22. The particle trap 30 has two planes which are connected in a ramp shape. Thus, there are several structures that exert a redirecting effect and support the redirection, which increases the turbulence and interaction of the venting gas VP with the particle trap 30.

### Reference signs

- 1: battery system
- 10: battery back
- 11: housing
- 12: floor
- 13: top
- 14: battery cell stack
- 15: battery cell
- 15': degassing battery cell
- 16: venting space
- 17: outlet
- 18: cavity
- 20: exhaust path
- 21: first side of the exhaust path
- 22: second side of the exhaust path
- 23: redirection element
- 231: first side of the redirection element
- 232: second side of the redirection element
- 233: curved portion
- 24: pocket
- 30: particle trap
- 30-1: first portion
- 30-2: second portion
- 30-3: third portion
- 31: humps
- D: stacking direction
- VP: venting products/gas

## Claims

1. A battery system (1), comprising:
a battery pack (10) including a housing (11) and a plurality of battery cells (15) accommodated within the housing (11),
an exhaust path (20) fluidly connected to the battery cells (15) and to an outlet (17) which leads out of the battery system (1), wherein the exhaust path (20) includes a redirection element (23) configured to redirect venting products (VP) exhausted by at least one of the battery cells (15) and flowing along the exhaust path (20) while a thermal runaway, and a pocket (24), wherein the pocket (24) is arranged at a first side of the exhaust path (21) and following the redirection element (23),
a particle trap (30) arranged in a first side of the redirection element (231), into which solids of the venting products (VP) are forced due to their inertia, such that a second side of the redirection element (232) remains free and the solids are trapped in the particle trap (30), and such that solids which are slowed down by the particle trap (30) are caught by the pocket (24).

2. The battery system (1) as claimed in claim 1, wherein the particle trap (30) and/or the pocket (24) comprises a material adapted such that the solids of the venting products (VP) which are forced to the first side of the redirection element (231) (23) due to their inertia are trapped in the particle trap (30).

3. The battery system (1) according to any one of the preceding claims, wherein the particle trap (30) and/or the pocket (24) comprise knitting or woven metal wires, a honeycomb shape, perforations and/or a grid element.

4. The battery system (1) as claimed in any one of the preceding claims, wherein the pocket (24) is arranged such that the slowed down solids are collected in the pocket (24) with the help of gravity.

5. The battery system (1) according to any one of the preceding claims, wherein the redirection element (23) comprises a curved portion (233).

6. The battery system (1) according to any one of the preceding claims, wherein the curved portion (233) has such a radius of curvature that a deflection angle of the venting products (VP) flowing through the redirection element (23) is less than 180°, preferably less than 135° and particularly preferably less than 100°.

7. The battery system (1) according to any one of the preceding claims, wherein the particle trap (30) extends after the redirection element (23) and/or wherein it partially overlaps the redirection element (23).

8. The battery system (1) according to any one of the preceding claims, wherein the particle trap (30) extends into the pocket (24).

9. The battery system (1) according to any one of the preceding claims, wherein the particle trap (30) and/or the pocket (24) comprises a roughened surface with a surface roughness greater than 0.5 mm.

10. Battery system (1) according to one of the preceding claims, wherein the redirection element (23) is configured such that a spin is induced into the venting products (VP).

11. Battery system (1) according to one of the preceding claims, wherein the redirection element (23) comprises a guide element which is designed to impose a rotational movement on the venting products (VP).

12. Battery system (1) according to one of the preceding claims, wherein the particle trap (30) and/or the pocket (24) comprises surface filters and/or depth filters on their surface.

13. The battery system (1) according to any one of the preceding claims, wherein the particle trap (30) comprises a plurality of humps (31).

14. The battery system (1) according to any one of the preceding claims, wherein the particle trap (30) has concave shape or comprises two planes which are connected in a ramp shape.

15. An electric vehicle comprising the battery system (1) as claimed in any one of the preceding claims.
